# EUROPÄISCHE PATENTSCHRIFT

(11) **EP 1 006 479 B1**
(45) Veröffentlichungstag und Bekanntmachung des Hinweises auf die Patenterteilung: **03.11.2004**
(21) Anmeldenummer: 99121137.6
(22) Anmeldetag: 22.10.1999
(51) Int. Cl.: G06K 19/077, G06K 7/00, G07C 9/00

(54) **Authentifikationssystem für PC-Cards**
Authentication system for PC-cards
Système d'authentification pour cartes PC

(30) Priorität: 04.12.1998 DE 29821644 U
(43) Veröffentlichungstag der Anmeldung: 07.06.2000
(73) Patentinhaber: Stocko Contact GmbH & Co. KG, 42327 Wuppertal (DE)
(72) Erfinder: Klatt, Dieter, 42489 Wülfrath (DE)
(74) Vertreter: Stenger, Watzke & Ring Patentanwälte

(56) Entgegenhaltungen:
- WO-A-98/38567
- DE-A- 19 648 767
- DE-A- 19 716 694
- US-A- 5 827 179

## Beschreibung

Die Erfindung betrifft ein Authentifikationssystem für PC-Cards mit den Merkmalen des Oberbegriffs des Anspruchs 1. Ein derartiges Authentifikationssystem ist beispielsweise aus der WO 98/38567 bekannt.

Im Rahmen zunehmender Mobilität im Bereich der Computertechnologie sind im Hinblick auf Variabilität und Transportabilität immer öfter PC-Cards anzutreffen, bei denen es sich um kartenförmige Trägerelemente elektronischer Bauteile handelt, die in der Regel nach PCMCIA-Standard genormt sind und je nach Anwendungsfall als beispielsweise Speichererweiterung, Laufwerk, Modem oder Chipkarten-Leseeinheit ausgebildet sein können. Der Anschluß an eine Rechenanlage, wie beispielsweise ein Notebook oder ein elektrischer Organizer, erfolgt über die Steckverbinderleiste, die mit einem PCMCIA-Steckplatz der Rechenanlage eine mechanische und elektrische Kontaktierung bewirkt.

Insbesondere die Verwendung der PC-Card als Leseeinheit für Chipkarten unterliegt einer zunehmenden Verbreitung. Dies ist darauf zurückzuführen, dass Chipkarten als sogenannte Smart-Cards immer häufiger für eine Identitätsprüfung herangezogen werden. Anwendung hierfür besteht beispielsweise in den Bereichen Online-Banking, wie etwa Internet-Banking nach dem HBCI-Standard, Pay-TV oder der Zugangskontrolle zu Datennetzen. Die Identifikation und Autorisierung des berechtigten Anwenders kann dabei zusammen mit einer vom Anwender einzugebenden Geheimzahl, wie etwa einer PIN, erfolgen.

Eine verhältnismäßig hohe Sicherheit läßt sich dann erreichen, wenn die Smart-Card nicht nur zur Identifikation des Anwenders dient, sondern zugleich zu übertragende Daten, etwa via Internet, verschlüsselt. Je nach Verschlüsselungsverfahren, beispielsweise mit einem 56 Bit oder 128 Bit langen Schlüssel, ergibt sich auf diese Weise ein relativ hoher Schutz davor, dass Unbefugte den Datenverkehr mitprotokolieren, um Informationen wie beispielsweise Geheimzahlen, Kreditkartennummern und ähnliches zu erhalten.

Mit der ständig zunehmenden Hinwendung zu transportablen Computern, wie beispielsweise Notebooks oder elektronischen Organizer, besteht technisch das Bedürfnis, die Authentifikation von PC-Cards zu verbessern. Zwar bieten - wie zuvor erörtert - Paßwort-Verfahren und Verfahren mit Smart-Cards im Zusammenhang mit einem Kryptosystem eine verhältnismäßig hohe Sicherheit bei der Übertragung von Daten, die Prüfung der Authentizität von Anwendern ist aber verbesserungsbedürfig. Dies gilt um so mehr bei der mobilen Verwendung, die der Gefahr des Diebstahls oder Abhorchens, etwa einer PIN, im besonderen Maße unterliegt.

Der Erfindung liegt die **Aufgabe** zugrunde, ein Authentifikationssystem für PC-Cards zu schaffen, das bei hoher Sicherheit bezüglich eines Zugriffs von Unbefugten eine einfache Handhabung gewährleistet.

Die Aufgabe ist bei einem Authentifikationssystem der eingangs genannten Art **gelöst** durch die ergänzenden Merkmale gemäß dem kennzeichnenden Teil des Anspruchs 1.

Das erfindungsgemäße Authentifikationssystem gewährleistet eine einfache Handhabung, die insbesondere den Anforderungen einer mobilen Verwendung von PC-Cards Rechnung trägt. Ursächlich hierfür ist, dass eine eindeutige und nahezu fälschungssichere Identifikation von Anwendern durch die sensorische Erfassung biometrischer Daten, wie etwa eines Fingerabdrucks oder der menschlichen Netzhaut, auf einfache und schnelle Weise möglich ist. Ein Zugriff durch Nichtberechtigte ist aufgrund der Individualität der biometrischen Daten somit auch bei Diebstahl ausgeschlossen.

Dadurch, dass der Sensor auf einem in das Gehäuse ein- und ausfahrbaren Schlitten angeordnet ist, der sich vorzugsweise auf der der Steckverbinderleiste gegenüberliegenden Stirnseite des Gehäuses befindet, ist der Sensor vorteilhaft nur bei Bedarf zugänglich und verbleibt ansonsten geschützt im Gehäuse, wodurch zum einen der mobilen Handhabung und zum anderen einer reglementierten Identifikation, in dem beispielsweise der Sensor nur bei eingeführter Chipkarte aus dem Gehäuse fährt, Rechnung getragen wird. Von Vorteil ist es ferner, den Schlitten mit einer, vorzugsweise elektrisch angetriebenen Geradführung zu versehen, um eine präzise Führung und eine automatische Steuerung des Schlittens zu erreichen.

Zweckmäßigerweise bildet die Oberseite der in den Einschubkanal eingeschobenen Chipkarte eine Führungsbahn für den Schlitten, so dass bei ausgefahrenem Schlitten die Chipkarte zugleich eine mechanische Auflage darstellt, die insbesondere infolge der damit verbundenen Robustheit der PC-Card bei der mobilen Verwendung zum Tragen kommt. Zweckmäßig ist überdies, wenn der Sensor elektrisch mit der Leiterplatte verbunden ist, um auf einfache Art und Weise einen Datenaustausch beispielsweise mit der an die Steckverbinderleiste angeschlossenen Rechenanlage zu erzielen. Die elektrische Verbindung mit der Leiterplatte kann dabei in an sich bekannter Weise mittels eines Kabels oder einer leitenden Verbindungsfolie erfolgen.

In einer bevorzugten Aufgestaltung der Erfindung weist das Gehäuse eine Bodenplatte und eine zumindest in Querrichtung deckungsgleiche Abdeckplatte auf, zwischen denen ein an der der Steckverbinderleiste gegenüberliegenden Stirnseite des Gehäuses mündender, schlitzartiger Einschubkanal für die Aufnahme einer Chipkarte ausgebildet ist, wobei ein parallel zum Einschubkanal im Gehäuse angeordnete Leiterplatte elektrisch mit der Steckverbinderleiste verbunden und an ihrer Oberfläche mit einem Kontaktelement für die Kontaktierung der Chipkarte versehen ist. Die PC-Card dient in dieser Ausgestaltung als Chipkarten-Leseeinheit und ermöglicht bei der Verwendung von Smart-Cards die Verschlüsselung von Daten, beispielsweise mit einem auf den erfaßten biometrischen Daten beruhenden Schlüssel.

Gemäß einer weiteren vorteilhaften Ausgestaltung der Erfindung ist der Sensor auf der Leiterplatte angeordnet und liegt in einer Ausnehmung des Gehäuses frei.

Diese Ausgestaltung erweist sich hinsichtlich einer einfachen und kostengünstigen Fertigung als vorteilhaft. Eine handhabungsgerechte und konstruktiv einfache Anordnung der Ausnehmung ergibt sich dann, wenn diese als rückspringende Stirnkante der Abdeckplatte des Gehäuses ausgebildet ist, so dass die darunter angeordnete Leiterplatte einen freigelegten Bereich aufweist.

In Weiterbildung der Erfindung wird weiterhin vorgeschlagen, dass der Sensor und/oder der Schlitten bei einer bestimmten Position der Chipkarte in dem Einschubkanal, bei elektrischem Kontakt der PC-Card mit der Rechenanlage und/oder durch elektrische Signale der Rechenanlage aktivier- bzw. deaktivierbar sind. Auf diese Weise ist es zum Beispiel möglich, dass der Schlitten erst bei vollständig in den Einschubkanal des Gehäuses eingeschobener Chipkarte aus dem Gehäuse fährt und bei Entnahme der Chipkarte von selbst wieder einfährt. Die Position der Chipkarte kann dabei durch einen End- oder Bewegungsschalter festgestellt werden. Es ist außerdem möglich, dass der Sensor durch Signale der angeschlossenen Rechenanlage gesteuert wird, so dass sich eine reglementierte Erfassung der biometrischen Daten erzielen läßt.

Um eine autonome Energieversorgung zu erreichen, wie sie insbesondere für den mobilen Gebrauch erforderlich ist, wird gemäß einem weiteren Merkmal der Erfindung vorgeschlagen, dass der Sensor und/oder der Schlitten durch eine Batterie oder einen Speicherkondensator, die im Gehäuse angeordnet sind, mit elektrischer Energie versorgbar sind. Schließlich wird vorgeschlagen, dass der Sensor mit einem kryptografischen Prozessor zum Chiffrieren und Dechiffrieren von erfaßten Daten verbunden ist, der vorzugsweise auf der Leiterplatte oder der Chipkarte angeordnet ist. Das Vorsehen eines eigenen Prozessors zum Chiffrieren/Dechiffrieren von Daten ermöglicht die Verwendung komplexer Kryptosyteme und bietet damit eine hohe Sicherheit.

Weitere Einzelheiten, Merkmale und Vorteile des Gegenstandes der Erfindung ergeben sich aus der nachfolgenden Beschreibung von mehreren bevorzugten Ausführungsbeispielen. In den zugehörigen Zeichnungen zeigen im einzelnen:
- Fig. 1: eine perspektivische Darstellung einer PC-Card mit ausgefahrenem Schlitten gemäß der Erfindung ;
- Fig. 2a: eine perspektivische Darstellung einer als Chipkarten-Leseeinheit ausgebildeten PC-Card mit ausgefahrenem und auf der Chipkarte aufliegendem Schritten gemäß der Erfindung;
- Fig. 2b: eine perspektivische Ansicht der PC-Card gemäß Fig. 2a bei entfernter Chipkarte und teilweise freigelegtem Gehäuse und
- Fig. 3: eine perspektivische Ansicht eines alternativen Beispiels, als Chipkarten-Leseeinheit ausgebildeten PC-Card mit auf einer Leiterplatte angeordnetem Sensor.

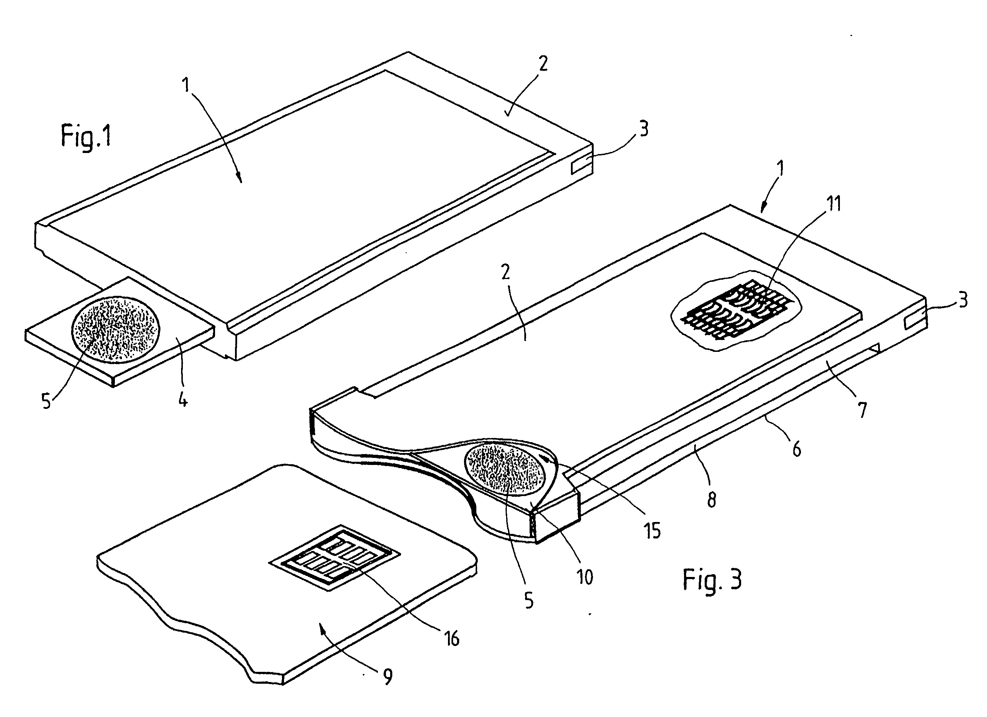

In Fig. 1 ist eine nach PCMCIA-Standard vom Typ II genormte PC-Card 1 dargestellt. Die PC-Card 1 weist ein Gehäuse 2 auf, an dessen einer Stirnseite eine Steckverbinderleiste 3 zum elektrischen Anschließen an eine mit einer normgemäßen PCMCIA-Schnittstelle versehenen Rechenanlage, wie etwa ein Notebook oder ein elektronischer Organizer, angeordnet ist. Auf der gegenüberliegenden Stirnseite ist ein in das Gehäuse 2 ein- und ausfahrbarer Schlitten 4 vorgesehen, auf dem ein Sensor 5 zur Erfassung biometrischer Daten, wie beispielsweise ein Fingerabdruck oder die menschliche Netzhaut, angeordnet ist. Der in den je nach Anforderung aus Kunststoff oder Metall bestehenden Schlitten 4 eingelassene Sensor 5 ist im vorliegenden Fall folienartig ausgebildet und dient zur Erfassung des Fingerabdrucks. Die in Fig. 1 gezeigte PC-Card 1 kann beispielsweise als Modem für das Telefonfestnetz oder das GSM-Funknetz ausgebildet sein.

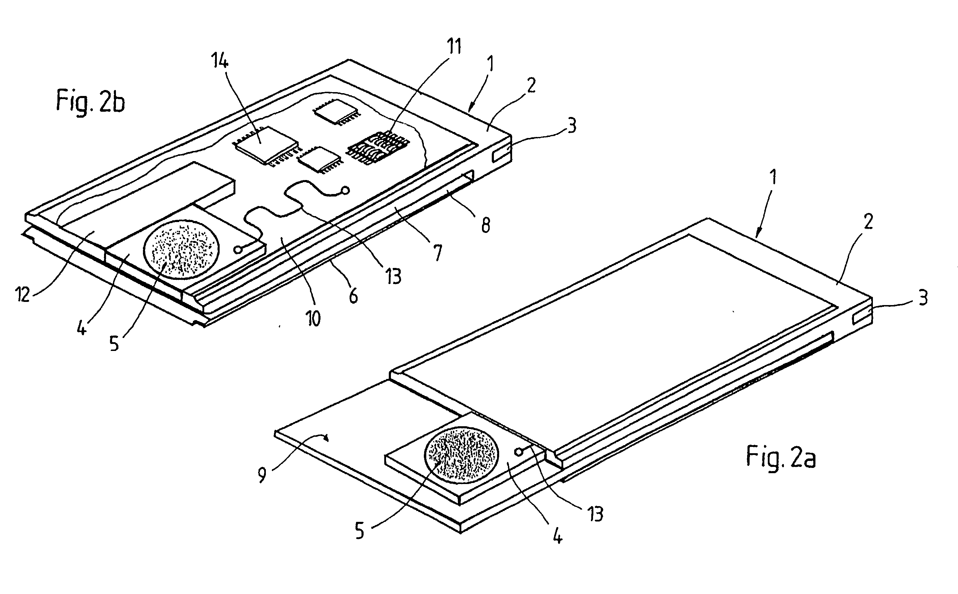

Im Vergleich hierzu stellt die in den Fig. 2a und 2b gezeigte PC-Card 1 eine Chipkarten-Leseeinheit dar, bei der sich das Gehäuse 2 aus einer Bodenplatte 6 und einer deckungsgleichen Abdeckplatte 7 zusammensetzt, zwischen denen ein an der der Steckverbinderleiste 3 gegenüberliegenden Stirnseite des Gehäuses 2 mündender, schlitzartiger Einschubkanal 8 für die Aufnahme einer Chipkarte 9 ausgebildet ist. Wie insbesondere in der das Gehäuse 2 teilweise freigelegt zeigenden Darstellung gemäß Fig. 2b zu erkennen ist, ist im Inneren des Gehäuses 2, parallel zum Einschubkanal 8 eine Leiterplatte 10 angeordnet, die ein als Federkontakt ausgebildetes Kontaktfeld 11 für die Kontaktierung der Chipkarte 9 aufweist. Auf der Leiterplatte 10 ist ferner ein elektrischer Antrieb 12 für den Schlitten 4 angeordnet, der zugleich eine Flachführung für diesen darstellt. Fig. 2b läßt ferner erkennen, dass der Schlitten 4 elektrisch mit der Leiterplatte 10 mittels eines elastischen Kabels 13 verbunden ist. Auf der Leiterplatte 10 befindet sich außerdem ein kryptografischer Prozessor 14, mit dem die durch den Sensor 5 erfaßten biometrischen Daten chiffrier- bzw. dechiffrierbar sind. Aus Fig. 2a ist überdies ersichtlich, dass die Oberseite der Chipkarte 9 eine Auflage für den Schlitten 4 bildet, wenn dieser aus dem Gehäuse 2 herausfährt.

Die in Fig. 3 dargestellte PC-Card 1 ist ebenfalls als Chipkarten-Leseeinheit ausgebildet. Im Unterschied zu der in den Fig. 2a und 2b dargestellten Chipkarten-Leseeinheit ist die PC-Card 1 gemäß Fig. 3 ohne Schlitten 4 ausgebildet. Der Sensor 5 zur Erfassung biometrischer Daten befindet sich stattdessen direkt auf der Leiterplatte 10, wobei die Abdeckplatte 7 im Bereich des Sensors 5 mit einer Ausnehmung 15 versehen ist. Die Ausnehmung 15 wird im vorliegenden Fall dadurch gebildet, dass die stirnseitige Kante der Abdeckplatte 7 auf der der Steckverbinderleiste 3 gegenüberliegenden Stirnseite zurückspringt und dadurch die darunter angeordnete Leiterplatte 10 freilegt. Fig. 3 läßt ferner ein auf der Chipkarte 9 angeordnetes, flächiges Kontaktfeld 16 erkennen, das bei in den Einschubkanal 8 eingeführter Chipkarte 9 die Unterseite des auf der Leiterplatte 10 angeordneten Kontaktfeldes 11 elektrisch und mechanisch kontaktiert.

Durch die Anordnung des biometrische Daten erfassenden Sensors 5 an der PC-Card 1 wird ein Authentifikationssystem geschaffen, das es ermöglicht, die Authenzität von Personen oder Personengruppen festzustellen. Aufgrund der individuellen Merkmale biometrischer Daten ist auf einfache Art und Weise eine eindeutige und zuverlässige Identitätsprüfung möglich, die infolge des Ausschließens eines Fremdzugriffs in besonderem Maße den Anforderungen bei mobiler Verwendung von PC-Cards Rechnung trägt. Durch das Vorsehen eines kryptografischen Prozessors 14 ist es ferner möglich, die erfaßten biometrischen Daten mittels eines komplexen Kryptosystems in für Unbefugte unverständliche Daten zu transformieren und den zur Verwendung der Daten Befugten die zum chiffrieren/dechiffrieren erforderlichen Informationen zur Verfügung zu stellen.

Damit eignet sich das erfindungsgemäße Authentifikationssystem in besonderem Maße für als Chipkarten-Leseeinheiten ausgebildete PC-Cards, die im Zusammenhang mit Smart-Cards einen reglementierten und sicheren Zugriff auf Datennetze oder ähnliches ermöglichen. Durch die Identifikation von Personengruppen, beispielsweise durch sukzessives Erfassen mehrerer Fingerabdrücke, wozu beispielsweise auch mehrere Sensoren auf der Chipkarte 9 oder an der PC-Card 1 vorgesehen sein können, läßt sich eine der jeweils angestrebten Sicherheit entsprechende multiple Verschlüsselung erzielen. Einer hohen Sicherheit wird nicht zuletzt auch dadurch Rechnung getragen, dass bei der Verwendung eines den Sensor 5 zur Erfassung biometrischer Daten tragenden Schlittens 4 dieser durch eine Rechenanlage, an welche die PC-Card 1 angeschlossen ist, hinsichtlich einer reglementierten Identitätsprüfung beispielsweise durch Provider steuerbar ist.

### Bezugszeichenliste

- 1: PC-Card
- 2: Gehäuse
- 3: Steckverbinderleiste
- 4: Schlitten
- 5: Sensor
- 6: Bodenplatte
- 7: Abdeckplatte
- 8: Einschubkanal
- 9: Chipkarte
- 10: Leiterplatte
- 11: Kontaktfeld
- 12: Antrieb
- 13: Kabel
- 14: Prozessor
- 15: Ausnehmung
- 16: Kontaktelement

## Patentansprüche

1. Authentifikationssystem für PC-Cards nach PCMCIA-Norm, bestehend aus einem steckkartenförmigen Gehäuse (2) zur Aufnahme elektronischer Bauelemente, das stirnseitig mit einer Steckverbinderleiste (3) zum elektrischen Anschließen an eine Rechenanlage versehen ist, **wobei**
daß ein Sensor (5) zur Erfassung biometrischer Daten vorgesehen ist, mit denen die Authentizität von Personen oder Personengruppen feststellbar ist,
**dadurch gekennzeichnet,**
**dass** der Sensor (5) auf einem in das Gehäuse (2) ein- und ausfahrbaren Schtitten (4) angeordnet ist.

2. Authentifikationssystem nach Anspruch 1, **dadurch gekennzeichnet, dass** das Gehäuse (2) eine Bodenplatte (6) und eine zumindest in Querrichtung deckungsgleiche Abdeckplatte (7) aufweist, zwischen denen ein an der der Steckverbinderleiste (3) gegenüberliegenden Stirnseite des Gehäuses (2) mündender, schlitzartiger Einschubkanal (8) für die Aufnahme einer Chipkarte (9) ausgebildet ist, wobei eine parallel zum Einschubkanal (8) im Gehäuse (2) angeordnete Leiterplatte (10) elektrisch mit der Steckverbinderleiste (3) verbunden und an ihrer Oberfläche mit einem Kontaktelement (11, 19) für die Kontaktierung der Chipkarte (9) versehen ist.

3. Authentifikationssystem nach Anspruch 1 oder 2, **dadurch gekennzeichnet, dass** sich der Schtitten (4) auf der der Steckverbinderleiste (3) gegenüberliegenden Stirnseite des Gehäuses (2) befindet.

4. Authentifikationssystem nach einem der Ansprüche 1 bis 3, **dadurch gekennzeichnet, dass** der Schlitten (4) mit einer elektrisch angetriebenen Geradführung (12) versehen ist.

5. Authentifikationssystem nach einem der Ansprüche 1 bis 4, **dadurch gekennzeichnet, dass** die Oberseite der in den Einschubkanal (8) eingeschobenen Chipkarte (9) eine Führungsbahn für den Schlitten (4) bildet.

6. Authentifikationssystem nach einem der Ansprüche 1 bis 5, **dadurch gekennzeichnet, dass** der Sensor (5) elektrisch mit der Leiterplatte (10) verbunden ist.

7. Authentifikationssystem nach einem der Ansprüche 1 bis 6, **dadurch gekennzeichnet, dass** der Sensor (5) und/oder der Schlitten (4) bei einer bestimmten Position der Chipkarte (9) in dem Einschubkanal (8), bei elektrischem Kontakt der PC-Card (1) mit der Rechenanlage und/oder durch elektrische Signale der Rechenanlage aktivier- bzw. deaktivierbar sind.

8. Authentifikationssystem nach einem der Ansprüche 1 bis 7, **dadurch gekennzeichnet, dass** der Sensor (5) und/oder der Schlitten (4) durch eine Batterie oder einen Speicherkondensator, die im Gehäuse (2) angeordnet sind, mit elektrischer Energie versorgbar sind.

9. Authentifikationssystem nach einem der Ansprüche 2 bis 8, **dadurch gekennzeichnet, dass** der Sensor (5) mit einem kryptografischen Prozessor (14) zum Chiffrieren und Dechiffrieren von erfaßten Daten verbunden ist.

10. Authentifikationssystem nach Anspruch 9, **dadurch gekennzeichnet, dass** der Prozessor (14) auf der Leiterplatte (10) oder der Chipkarte (9) angeordnet ist.

11. Authentifikationssystem nach einem der Ansprüche 1 bis 10, **dadurch gekennzeichnet, dass** die elektronischen Bauelemente, eine Chipkarten-Leseeinheit, eine Speichererweiterung, ein Laufwerk oder ein Modem aufweisen.

## Claims

1. Authentication system for PC cards to the PCMCIA standard, comprising a housing (2) in the shape of a slot-in card to receive electronic components which is provided at one end with a connector strip (3) for electrical connection to a computer, wherein a sensor (5) is provided in order to detect biometric data with which the authenticity of persons or groups of persons can be established, **characterised in that** the sensor (5) is disposed on a slide (4) which can be moved into and out of the housing (2).

2. Authentication system as claimed in Claim 1, **characterised in that** the housing (2) has a base plate (6) and a cover plate (7) which is congruent at least in the transverse direction, between which there is constructed a slot-like insertion channel (8) which is designed to receive a chip card (9) and opens on the end face of the housing (2) opposite the connector strip (3), wherein a printed circuit board (10) parallel to the insertion channel (8) in the housing (2) is electrically connected to the connector strip (3) and provided on its surface with a contact element (11, 19) for contacting the chip card (9).

3. Authentication system as claimed in either Claim 1 or Claim 2, **characterised in that** the slide (4) is situated on the end face of the housing (2) opposite the connector strip.

4. Authentication system as claimed in any one of Claims 1 to 3, **characterised in that** the slide (4) is provided with an electrically driven straight guide (12).

5. Authentication system as claimed in any one of Claims 1 to 4, **characterised in that** the upper face of the chip card (9) inserted into the insertion channel (8) forms a guideway for the slide (4).

6. Authentication system as claimed in any one of Claims 1 to 5, **characterised in that** the sensor (5) is electrically connected to the printed circuit board (10).

7. Authentication system as claimed in any one of Claims 1 to 6, **characterised in that** the sensor (5) and/or the slide (4) can be activated or deactivated when the chip card (9) is in a specific position in the insertion channel (8), when electrical contact is made between the PC card (1) and the computer, and/or due electrical signals from the computer.

8. Authentication system as claimed in any one of Claims 1 to 7, **characterised in that** the sensor (5) and/or the slide (4) can be supplied with electrical power by a battery or a storage capacitor which are disposed in the housing (2).

9. Authentication system as claimed in any one of Claims 2 to 8, **characterised in that** the sensor (5) is connected to a cryptographic processor (14) for encoding and decoding collected data.

10. Authentication system as claimed in Claim 9, **characterised in that** the processor (14) is disposed on the printed circuit board (10) or the chip card (9).

11. Authentication system as claimed in any one of Claims 1 to 10, **characterised in that** the electronic components have a chip card reader, a memory expansion, a drive or a modem.

## Revendications

1. Système d'authentification pour cartes PC selon la norme PCMCIA, constitué d'un boîtier (2) en forme de cartes enfichables destiné à la réception de composants électroniques, dont la face frontale est munie d'un connecteur multibroche (3) pour le raccordement électrique à un système d'ordinateur, un détecteur (5) étant prévu pour la détection de données biométriques avec lesquelles l'authenticité de personnes ou de groupes de personnes peut être décelée, **caractérisé en ce que** le détecteur (5) est disposé sur un tiroir (4) pouvant être sorti du boîtier (2) et rentré dans ce dernier.

2. Système d'authentification selon la revendication 1, **caractérisé en ce que** le boîtier (2) comporte une plaque de fond (6) et une plaque de recouvrement (7) convergente, au moins dans la direction transversale, entre lesquelles est formé un canal d'insertion (8) de type fente pour la réception d'une carte à puce (9), qui débouche au niveau de la face frontale du boîtier (2) opposée au connecteur multibroche (3), une plaquette à circuits imprimés (10) disposée dans le boîtier (2) parallèlement au canal d'insertion (8) étant reliée électriquement au connecteur multibroche (3), et étant munie en surface d'un élément de contact (11, 19) pour l'établissement du contact avec la carte à puce (9).

3. Système d'authentification selon la revendication 1 ou 2, **caractérisé en ce que** le tiroir (4) est situé sur la face frontale du boîtier (2) opposée au connecteur multibroche (3).

4. Système d'authentification selon l'une quelconque des revendications 1 à 3, **caractérisé en ce que** le tiroir (4) est muni d'un guidage droit (12) entraîné électriquement.

5. Système d'authentification selon l'une quelconque des revendications 1 à 4, **caractérisé en ce que** la face supérieure de la carte à puce (9) insérée dans le canal d'insertion (8) forme une voie de guidage pour le tiroir (4).

6. Système d'authentification selon l'une quelconque des revendications 1 à 5, **caractérisé en ce que** le détecteur (5) est relié électriquement à la plaquette à circuits imprimés (10).

7. Système d'authentification selon l'une quelconque des revendications 1 à 6, **caractérisé en ce que** le détecteur (5) et/ou le tiroir (4) peuvent être activés ou désactivés lorsque la carte à puce (9) occupe une certaine position dans le canal d'insertion (8), lorsque la carte PC (1) est en contact électrique avec le système d'ordinateur et/ou par des signaux électriques du système d'ordinateur.

8. Système d'authentification selon l'une quelconque des revendications 1 à 7, **caractérisé en ce que** le détecteur (5) et/ou le tiroir (4) peuvent être alimentés en énergie électrique par une batterie, ou par un condensateur à accumulation, qui est disposée dans le boîtier (2).

9. Système d'authentification selon l'une quelconque des revendications 2 à 8, **caractérisé en ce que** le détecteur (5) est relié à un processeur cryptographique (14) pour le chiffrage et le déchiffrage de données détectées.

10. Système d'authentification selon la revendication 9, **caractérisé en ce que** le processeur (14) est disposé sur la plaquette à circuits imprimés (10) ou sur la carte à puce (9).

11. Système d'authentification selon l'une quelconque des revendications 1 à 10, **caractérisé en ce que** les composants électroniques comportent une unité de lecture pour cartes à puce, une extension de mémoire, un mécanisme d'entraînement ou un modem.
